# EUROPÄISCHE PATENTSCHRIFT

(11) **EP 0 625 922 B1**
(45) Veröffentlichungstag und Bekanntmachung des Hinweises auf die Patenterteilung: **25.10.1995**
(21) Anmeldenummer: 93903909.5
(22) Anmeldetag: 04.02.1993
(51) Int. Cl.: B01D 1/18, F26B 21/04

(54) **VERBESSERTES VERFAHREN ZUR TROCKNUNG VON WERTSTOFFEN FÜR WASCH- UND REINIGUNGSMITTEL MIT ÜBERHITZTEM WASSERDAMPF**
IMPROVED PROCESS FOR DRYING VALUABLE SUBSTANCES USEFUL FOR WASHING AND CLEANING AGENTS BY MEANS OF OVERHEATED STEAM
PROCEDE AMELIORE DE DESSICATION DE PRODUTIS D'INTERET POUR DETERGENTS ET NETTOYANTS AVEC DE LA VAPEUR D'EAU SURCHAUFFEE

(30) Priorität: 12.02.1992 DE 4204035
(43) Veröffentlichungstag der Anmeldung: 30.11.1994
(73) Patentinhaber: Henkel Kommanditgesellschaft auf Aktien, 40191 Düsseldorf (DE)
(72) Erfinder: RÄHSE, Wilfried, D-4000 Düsseldorf 13 (DE); FUES, Johann, D-4048 Grevenbroich 5 (DE); KOCH, Otto, D-5653 Leichlingen (DE); SCHMIDT, Jörg-Martin, D-4000 Düsseldorf 13 (DE)
(86) Internationale Anmeldenummer: EP9300267
(87) Internationale Veröffentlichungsnummer: WO9315814

(56) Entgegenhaltungen:
- WO-A-92/05849
- FR-A- 2 002 088
- US-A- 3 946 495
- US-A- 4 171 243

## Beschreibung

Die Erfindung betrifft ein verbessertes Verfahren zur Gewinnung hochwertiger feinteiliger fester schütt- beziehungsweise rieselfähiger Wertstoffe oder Wertstoffgemische, die als Netz-, Wasch- und Reinigungsmittel und/oder zur Verwendung in solchen Mitteln geeignet sind, aus ihren wäßrigen Zubereitungen. Das erfindungsgemäße Verfahren arbeitet mit einem oder mehreren Trocknungsschritten, wobei überhitzter Wasserdampf als Trocknungsgas verwendet wird.

Die Sprühtrocknung wäßriger Zubereitungen von Wertstoffen der genannten Art, die in großem Umfange beispielsweise als Textilwaschmittel Verwendung finden, wird seit Jahrzehnten in großtechnischem Maßstab durchgeführt. Als Trocknungsgasstrom werden Heißluft beziehungsweise Gemische von Luft und heißen Verbrennungsabgasen eingesetzt. Textilwaschpulver beziehungsweise Wertstoffe und/oder Wertstoffgemische zur Herstellung von Textilwaschmitteln in schütt- und rieselfähiger Pulverform werden in entsprechenden Sprühtürmen in der Regel im Bereich des Umgebungsdrucks in Gleichstrom- oder häufiger in Gegenstromfahrweise gewonnen.

Die Anmelderin beschreibt in ihrer älteren Anmeldung DE-A 40 30 688 ein Verfahren zur Gewinnung solcher feinteiliger fester schütt- beziehungsweise rieselfähiger Wertstoffe oder Wertstoffgemische für Netz-, Wasch- und/oder Reinigungsmittel aus ihren wäßrigen Zubereitungen, wobei überhitzter Wasserdampf als trocknender Heißgasstrom eingesetzt und dabei die Trocknung des partikulären Gutes vor dessen Gefährdung durch thermische Einwirkung abgebrochen wird. Erforderlichenfalls wird dabei die lagerbeständige Schütt- beziehungsweise Rieselfähigkeit des derart partiell aufgetrockneten Gutes durch Zusatz solcher Mischungsbestandteile sichergestellt, die zur Bindung begrenzter Wassermengen befähigt sind. Neben oder anstelle dieser Maßnahme kann auch eine Nachbehandlung zur Homogenisierung des Restfeuchtegehaltes im partikulären Gut und/oder dessen Nachtrocknung unter Wertstoff-schonenden Bedingungen angeschlossen werden. Die Lehre der im nachfolgenden geschilderten Erfindung betrifft eine gezielte Ausgestaltung dieses Verfahrens aus der genannten älteren Anmeldung. Die erfindungsgemäße Lehre will dabei gerade beim Einsatz von überhitztem Wasserdampf als Trocknungsgas die Gewinnung höchstwertiger Wertstoffe beziehungsweise Wertstoffgemische des hier betroffenen Arbeitsbereiches ermöglichen. Verständlich wird dabei die Aufgabenstellung der Erfindung aus den nachfolgenden lediglich beispielhaft gebrachten Überlegungen:
Die in der Praxis heute an hochwertige Reinigungsmittel, insbesondere Textilwaschmittel, gestellten Anforderungen erschöpfen sich nicht in Erwartungen zur Leistungsfähigkeit im praktischen Einsatz. Wichtig sind darüberhinaus das visuelle Erscheinungsbild - bei Textilwaschmitteln beispielsweise die Hellfarbigkeit - sowie weiterführende physikalische Stoffeigenschaften wie gute Rieselfähigkeit, hohes Schüttgewicht, rasches Auflösungsvermögen in Wasser beziehungsweise gute Einspüleigenschaften und dergleichen.

Die Lehre der Erfindung geht von der Aufgabe aus, im Rahmen des hier betroffenen Arbeitsgebietes für die Wertstofftrocknung mit überhitztem Wasserdampf als Trocknungsmedium optimierte Bedingungen aufzuzeigen, die den Zugang zu den geforderten hochwertigen Wertstoffen beziehungsweise Wertstoffgemischen im Trockenzustand ermöglichen.

Zu berücksichtigen ist in diesem Zusammenhang, daß bis heute die praktischen Erfahrungen beim Einsatz von Trocknungsverfahren unter Verwendung von überhitztem Wasserdampf als Trocknungsgas sehr beschränkt sind, obwohl diese Technologie an sich seit dem Anfang dieses Jahrhunderts bekannt ist und in der Literatur wiederholt beschrieben wird. Die ältere Patentanmeldung DE-A 40 30 688 setzt sich mit dem einschlägigen druckschriftlichen Stand der Technik ausführlich auseinander. Auf diese Angaben der älteren Anmeldung sei hier verwiesen und lediglich die nachfolgenden Veröffentlichungen benannt, die ihrerseits umfangreiche Literaturverzeichnisse zu diesem Arbeitsgebiet beinhalten: A.M. Trommelen et al. "Evaporation and Drying of Drops in Superheated Vapors" AIChE Journal 16 (1970) 857 - 867; Colin Beeby et al. "STEAM DRYING" Plenary Lecture, Proc. 4th Int. Drying Sym. Kyoto (eds. R. Toei and Arun S. Mujumdar) 1984, Bd. 1, 51-68 sowie W.A. Stein "Berechnung der Verdampfung von Flüssigkeit aus feuchten Produkten im Sprühturm" Verfahrenstechnik 7 (1973) 262 - 267.

### Gegenstand der Erfindung

Die Erfindung betrifft die Lösung der zuvor geschilderten Aufgabenstellung der Gewinnung in vielgestaltiger Weise hochwertiger Wertstoffe beziehungsweise Wertstoffgemische, die als Netz-, Wasch- und/oder Reinigungsmittel und/oder zur Verwendung in solchen Mitteln geeignet sind. Die Erfindung betrifft dabei ein Verfahren zur Trocknung dieser wasserhaltigen Wertstoffe oder Wertstoffgemische, die auch als wäßrige Zubereitungen vorliegen können, unter Einsatz von überhitztem Wasserdampf als Trocknungsgas, das nach Ausschleusen des verdampften Wasseranteiles im Kreislauf in die Trocknungsstufe zurückgeführt wird. Die erfindungsgemäße Lehre sieht vor, daß der für die Wasserverdampfung benötigte Energiebetrag dem Dampfkreislaufstrom wenigstens weitaus überwiegend, bevorzugt ausschließlich durch indirekten Wärmeaustausch zugeführt wird. Bevorzugt wird darüberhinaus mit Innendrucken des dampferfüllten Systems im Bereich des Normaldrucks gearbeitet, dabei werden aber insbesondere derart angehobene Drucke im Kreislaufsystem eingestellt, daß - beispielsweise an Schadstellen, wie sie in großtechnischen Anlagen niemals völlig auszuschließen sind - Lufteinbrüche in das dampferfüllte Kreislaufsystem mit Sicherheit verhindert werden können.

Es hat sich gezeigt, daß bei Einhaltung dieser Arbeitsbedingungen mit Wasserdampf, beispielsweise gerade auf dem Gebiet der Herstellung von Wertstoffen beziehungsweise Wertstoffgemischen für Textilwaschmittel, neue Möglichkeiten erschlossen werden, die im Rahmen der bisher großtechnisch durchgeführten Trocknungsverfahren mit Heißluft und/oder Rauchgasen nicht zugänglich sind. Verantwortlich ist dafür offensichtlich einerseits der für Trocknungsvorgänge in der überhitzten Wasserdampfatmosphäre charakteristische Trocknungsverlauf am zu trocknenden Wertstoff, andererseits aber auch der zuverlässige und totale Ausschluß von Schadstoffen - insbesondere Sauerstoff und Kohlendioxid - im Trocknungsgas auf Basis des überhitzten Wasserdampfes. Unerwünschte oxydative Angriffe am zu trocknenden Gut sind ebenso ausgeschlossen wie die Bildung von Carbonatsalzen beziehungsweise Carbonatablagerungen, die in den meist basischen Wertstoffen des hier betroffenen Arbeitsbereiches beim Arbeiten mit Rauchgas-enthaltenden Trocknungsgasen unvermeidlich sind.

Die Erfindung betrifft in weiteren Ausführungsformen die Anwendung dieses Verfahrens zur Gewinnung von rieselfähigen Tensid-Feststoffen, insbesondere aus dem Bereich der Aniontenside auf Naturstoffbasis, weiterhin die Anwendung auf die Gewinnung getrockneter Wertstoffe auf Silikat-Basis, die insbesondere in Textilwaschmitteln Verwendung finden können, sowie schließlich auf die Anwendung des beschriebenen Verfahrens zur Gewinnung sogenannter TextilwaschmittelTurmpulver, denen temperatursensitive und/oder wasserdampfflüchtige Komponenten zum Aufbau beziehungsweise zur vollen Rezeptierung der fertigen Textilwaschmittel nachträglich zugesetzt werden können.

### Einzelheiten zur erfindungsgemäßen Lehre

Die im Rahmen der vorliegenden Offenbarung betroffene technische Lehre ist eine Weiterentwicklung der bereits mehrfach zitierten älteren Anmeldung DE-A 40 30 688. Aus Gründen der Vollständigkeit der Erfindungsoffenbarung wird hiermit die Offenbarung dieser älteren Anmeldung ausdrücklich auch zum Gegenstand der vorliegenden Erfindungsoffenbarung gemacht. Darüberhinausgehend sind die folgenden Verfahrenselemente wichtig:
Auch unter den erfindungsgemäßen Arbeitsbedingungen kann die Trocknung mit dem überhitzten Wasserdampf einerseits als Sprühtrocknung und/oder andererseits aber auch als Trocknung in Wirbelschicht vorgenommen werden. Vergleichsweise hoch wasserhaltige Einsatzmaterialien liegen beispielsweise als fließfähige und versprühbare wäßrige Lösungen, Emulsionen und/oder Suspensionen der aufzutrocknenden Wertstoffe beziehungsweise Wertstoffgemische vor. Einsatzmaterialien dieser Art werden in einer wichtigen Ausführungsform der an sich bekannten Technologie der Sprühtrocknung unterworfen. Die Sprühtrocknung kann in entsprechend ausgerüsteten Sprühtürmen in Gleichstrom- oder in Gegenstromfahrweise vorgenommen werden. Die Anwendung des Gegenstromprinzips ist auch im Rahmen des erfindungsgemäßen Arbeitens mit überhitztem Wasserdampf als Trocknungsheißgas in der Regel bevorzugt.

Beim Arbeiten unter den Bedingungen der Sprühtrocknung wird es erfindungsgemäß bevorzugt den indirekten Energieeintrag zur Zuführung der Verdampfungsenergie in den Dampf-kreislauf wenigstens überwiegend außerhalb der Trocknungszone vorzunehmen. Auf diese Weise wird das aus der konventionellen Sprühtrocknung bekannte Ergebnis sichergestellt, das fließfähige nasse Einsatzmaterial in feiner Partikelform ohne nennenswertes Verkleben der Partikel miteinander oder wenigstens unter einer steuerbaren Einstellung der Partikelgröße aufzutrocknen. Der außerhalb der Sprühtrocknungszone am Dampfkreislauf vorgenommene Energieeintrag kann in jeder bekannten beliebigen Form der indirekten Wärmeübertragung vorgenommen werden. Als Beispiel sei die Verwendung von Rohrbündelsystemen erwähnt, die einerseits von Heizgasen beliebigen Ursprungs und andererseits - aber getrennt von diesen Heizgasen - von dem aufzuheizenden Wasserdampfstrom durchströmt werden.

In einer besonders wichtigen Ausführungsform der Erfindung wird dieser indirekte Energieeintrag in den Dampfkreislaufstrom mittels eines oder mehrerer integrierter Brenner mit indirekter Wärmeübertragung auf den Dampfstrom vorgenommen, wobei Brenner-seitig die heißen Verbrennungsgase unmittelbar in den Wärmeaustauscher eingeleitet werden, der in den Dampfkreislaufstrom integriert ist. Die Temperatur der Verbrennungsgase kann dabei beispielsweise im Bereich von etwa 400 bis 1.000°C und insbesondere im Temperaturbereich von etwa 650 bis 960°C liegen. Zur optimalen Wärmeausnutzung und damit zur Kostensenkung des Gesamtverfahrens kann es zweckmäßig sein, eine anteilige, bevorzugt möglichst weitgehende Kreislaufführung auch der Rauchgase vorzusehen. So können beispielsweise wenigstens 30 Vol.-% und vorzugsweise mehr als 40 Vol.-% der heißen Rauchgase nach dem Verlassen des integrierten Wärmeaustauschers im Kreislauf zur weiteren Energieverwertung wieder zurückgeführt werden. Vorzugsweise liegt die Menge der Rauchgaskreislaufführung bei mehr als 60 Vol.-% und dabei häufig im Bereich von etwa 70 Vol.-% der zugeführten Verbrennungsgase. Zum Betrieb des Brenners sind alle üblichen Brenngase, insbesondere Erdgas oder vergleichbare niedere Kohlenwasserstoffe beziehungsweise Kohlenwasserstoffgemische und/oder Wasserstoff geeignet.

Wird andererseits das erfindungsgemäße Trocknungsprinzip im Rahmen einer Wirbelschichttrocknung eingesetzt, so kann hier die erforderliche Aufheizung des Trocknungsgases auf Dampfbasis sowohl außerhalb der Trocknungszone als auch mit Wärmeaustauscherelementen bewirkt werden, die in das Wirbelbett integriert sind. Dabei können auch diese beiden Mechanismen der Gasaufheizung miteinander verbunden werden.

Das erfindungsgemäß bevorzugte Arbeiten im Bereich des Normaldrucks ermöglicht den vergleichsweise komplikationslosen Betrieb auch in großtechnischen Anlagen mit den geforderten hohen Stoffdurchsätzen pro Zeiteinheit. Die erfindungsgemäß bevorzugte Maßnahme des leicht angehobenen Innendrucks verhindert zuverlässig das unerwünschte Einbrechen von Fremdgas, insbesondere von Luft, in das mit Nasserdampf erfüllte Kreislaufsystem. Sekundärschädigungen der angestrebten hochwertigen Produktbeschaffenheit können damit zuverlässig ausgeschlossen werden. Geeignete Arbeitsdrucke liegen bei Überdrücken beispielsweise im Bereich bis etwa 150 mbar, zweckmäßig bis etwa 75 mbar und vorzugsweise unterhalb 50 mbar. Der Bereich von etwa 5 bis 15 mbar Überdruck kann besonders bevorzugt sein. Die Trocknung mit überhitztem Wasserdampf im Sinne der erfindungsgemäßen Lehre ist prinzipiell natürlich auch bei Unterdrucken, insbesondere im Bereich mäßiger Unterdrucke, möglich, erfordert dann aber einen erhöhten technischen Aufwand zur Sicherstellung des Ausschlusses möglicher Schadstellen im Kreislaufsystem, durch die unerwünschte Lufteinbrüche ausgelöst würden. Die zu den bevorzugten Bereichen des Überdrucks angegebenen Zahlenwerte sind hier sinngemäß anzuwenden.

Zur Durchführung des erfindungsgemäßen Verfahrens gelten im übrigen weitgehend die Angaben des eingangs genannten älteren Schutzrechtes der Anmelderin zur Trocknung der hier betroffenen Wertstoffgemische mit überhitztem Wasserdampf als Trocknungsgas. Zur Vervollständigung der Erfindungsoffenbarung werden diese Angaben hier - soweit erforderlich - auszugsweise wiederholt:
In der älteren Anmeldung ist als wesentlicher Gedanke zum Verständnis der Lehre des Trocknens von Wirkstoffgemischen der hier betroffenen Art mittels Heißdampf die Möglichkeit zum Verzicht auf die Einstellung optimaler Trocknungsergebnisse durch Heißdampfeinwirkung im Verfahrensendprodukt gesehen. Grundsätzlich gilt das auch im Rahmen der erfindungsgemäßen Lehre. Es hat sich allerdings gezeigt, daß beim zuverlässigen Ausschluß von Störfaktoren wie Rauchgasen und Luft beziehungsweise Sauerstoff auch solche Stoffgemische vergleichsweise temperaturunempfindlich sind, die unter den konventionellen Trocknungsbedingungen mit Heißgasen schneller zu unerwünschten Fremdreaktionen - beispielsweise Verfärbung, Verkrustung und dergleichen - neigen. Für den Einsatz der Heißdampftrocknung bedeutet das, daß ein sicheres Arbeiten sowohl mit Heißdampf in vergleichsweise hohen Temperaturbereichen als auch Auftrocknungsgrade bis auf sehr geringe Restfeuchtewerte ohne negative Beeinträchtigung der Stoffbeschaffenheit möglich sind. So können Restfeuchten deutlich unter 1 Gew.-%, beispielsweise im Bereich bis etwa 0,5 Gew.-% oder sogar noch darunter, im Trockengut eingestellt werden. Gleichzeitig kann mit Arbeitstemperaturen des aus der Trocknungszone austretenden verbrauchten Dampfes oberhalb 100 bis 110°C, vorzugsweise oberhalb 150°C und insbesondere oberhalb 180°C, gearbeitet werden. Gleichwohl gilt, daß auch Restfeuchten gegebenenfalls beträchtlichen Ausmaßes toleriert werden können, wenn in der Zusammensetzung des Gutes sichergestellt ist, daß durch eine Art "Innerer Trocknung" eine soweitgehende Bindung dieses Restwassers stattfindet, daß die lagerbeständige Schütt- und Rieselfähigkeit des Trockengutes gewährleistet ist.

Wie in der älteren Anmeldung beschrieben, sieht auch die Lehre der Erfindung neben oder anstelle dieses Hilfsmaßnahme die Nachbehandlung eines primär angefallenen teilgetrockneten Gutes vor. Eine solche Nachbehandlung wird durch 2 technische Konzeptionen bestimmt, die auch miteinander verbunden werden können.

Die erste dieser Konzeptionen geht von der Tatsache aus, daß der individuelle Auftrocknungsgrad des jeweils betroffenen Tröpfchens von seiner Teilchengröße bestimmt wird. Wird im erfindungsgemäßen Sinne das Sprühtrocknungsverfahren zu einem Zeitpunkt abgebrochen, an dem noch beträchtliche Mengen an Restfeuchte im Gut vorliegen, dann wird eine integrale Betrachtung des Restfeuchtegehaltes der Wirklichkeit nur teilweise gerecht. In der differentiellen Betrachtung der Verteilung dieser Restfeuchte über die einzelnen Gutanteile zeigt sich, daß die Fein- beziehungsweise Feinstanteile sehr weitgehend oder vollständig aufgetrocknet sein können, während die gröberen Gutanteile noch so beträchtliche Feuchtigkeitsmengen enthalten, daß eine lagerbeständige Schütt- und Rieselfähigkeit für das der Sprühzone entnommene Gut noch nicht sichergestellt ist. In einer wichtigen Ausführungsform des erfindungsgemäßen Verfahrens wird dementsprechend eine "Nachtrocknung" des Primärgutes aus der Sprühtrocknungszone durch einen zusätzlichen Behandlungsschritt erreicht, der - ohne das pulverförmige Gut einer Gefährdung durch Verklebung auszusetzen - zu einer Homogenisierung des Feuchtegehaltes über das Gesamtgut unabhängig von der individuellen Teilchengröße führt. Auf diese Weise kann aus den noch vergleichsweise feuchten gröberen Anteilen des Gutes soviel an Restfeuchte in das Fein- und Feinstgut übertragen werden, daß nach diesem Homogenisierungsschritt die lagerbeständige Schütt- und Rieselfähigkeit des Trockengutes gewährleistet sind, ohne das es des zusätzlichen Austrages weiterer Feuchtemengen aus dem Schüttgut bedarf.

Zur Verwirklichung dieser Nachbehandlungsstufe sind alle Verfahrenstechniken geeignet, die den Feuchtigkeitsausgleich zwischen den einzelnen Partikeln unter gleichzeitiger Verhinderung eines Verklebens der Masse sicherstellen. Lediglich beispielhaft seien hier benannt das Umwälzen oder Schütteln des primär angefallenen Gutes im kontinuierlichen oder diskontinuierlichen Verfahren. Besonders geeignet kann eine Nachbehandlung des Gutes in einer Wirbelschicht sein, die im Vergleich zum Sprühtrocknungsverfahren eine sehr viel höhere Feststoffdichte aufweist. Hierbei kann mit beliebigen Gasen, beispielsweise ganz einfach mit Umgebungsluft, gearbeitet werden. Oxydative Materialgefährdungen und/oder unerwünschte Verunreinigungen der Abluft treten hierbei nicht mehr auf, beziehungsweise sind leicht zu beherrschen. Da das zu trocknende Gut der Sprühtrocknungszone mit erhöhter Temperatur - üblicherweise im Bereich von etwa 100°C - entnommen wird, kann über eine solche nachgeschaltete Feuchtigkeitshomogenisierung im Rahmen einer Wirbelschicht, beispielsweise mit Umgebungsluft noch eine geringfügige zusätzliche Absenkung der Restfeuchte erzielt werden.

Neben oder anstelle einer solchen Hilfsmaßnahme kann im erfindungsgemäßen Verfahren aber auch eine zusätzliche Trocknung zur weiteren Absenkung der Restfeuchte vorgesehen sein. Erweist sich diese Nachtrocknung als wünschenswert, so wird im allgemeinen eine solche zusätzliche Nachtrocknungsstufe hinreichend sein. Die Nachtrocknung in einer Sequenz mehrer Stufen ist von der Lehre der Erfindung jedoch nicht ausgeschlossen. Charakteristisch für die Nachtrocknungsstufe(n) ist, daß hier unter Bedingungen gearbeitet wird, die eine substantielle Gefährdung der Wertstoffe des Trockengutes ausschließen. Prinzipiell steht hier eine Mehrzahl von Verfahrensparametern zur Risikominderung zur Verfügung. Beispielhaft seien genannt: Absenkung der Temperatur der Heißgasphase, Verzicht auf überhitzten Wasserdampf als Heißgas und dessen Ersatz durch Trocknungsgase anderen Ursprungs, beispielsweise Luft und/oder Inertgas sowie Übergang in eine andere Trocknungstechnologie.

In einer bevorzugten Ausführungsform des erfindungsgemäßen Verfahrens wird beim Einsatz eines solchen Nachtrocknungsschrittes die Feststoffdichte des zu trocknenden Gutes im Heißgasstrom substantiell erhöht, so daß sich in dieser Nachtrocknung die Verfahrensprinzipien einer Wirbelschichttrocknung der Sprühtrocknung aus der ersten Verfahrensstufe anschließen. Die Stufe dieser nachgeschalteten Wirbelschichttrocknung kann ihrerseits mit beliebigen Trocknungsgasen betrieben werden. In der bevorzugten Ausführungsform der Erfindung wird auch hier überhitzter Wasserdampf als Heißgas eingesetzt. Durch den intensiven Temperaturaustausch zwischen den jetzt vergleichsweise dicht gepackten Feststoffteilchen kann damit aber der unerwünschten Überhitzung des zu trocknenden Gutes und insbesondere der Gefahr der Überhitzung des Feinkornanteiles dieses Gutes wirkungsvoll gegengesteuert werden. In bevorzugten Ausführungsformen der Erfindung können auch in diesem Falle durch Zusammensetzung des zu trocknenden Gutes die Elemente der zuvor diskutierten "Inneren Trocknung" zur Abbindung noch verbliebener Restfeuchte mitverwendet werden.

Für den Einsatz im erfindungsgemäßen Verfahren eignen sich insbesondere wäßrige Zubereitungen solcher Wertstoffe beziehungsweise Wertstoffkombinationen aus dem Gebiet der Netz-, Wasch- und/oder Reinigungsmittel, die durch kurzfristige Einwirkung von Wasser beziehungsweise Wasserdampf im Temperaturbereich von 100 bis 110°C nicht oder nicht wesentlich geschädigt werden. Geeignet sind insbesondere als Wertstoffbestandteile Komponenten dieser Art, die unter den Arbeitsbedingungen den angegebenen Temperaturbereich wenigstens für einen Zeitraum von etwa 0,5 - 1 min. schadlos überstehen. Durch Steuerung der Verfahrensparameter - neben der Auslegung der Sprühtrocknungszone seien beispielsweise genannt der erfindungsgemäß eingesetzte Arbeitstemperaturbereich und die Tröpfchen- beziehungsweise Partikelgröße des versprühten Gutes - wird es möglich, die Verweildauer der jeweiligen Partikel unter den Bedingungen des überhitzten Wasserdampfes im Sekundenbereich zu wählen. Entscheidend ist, daß der Zeitraum dieser Temperatureinwirkung im erfindungsgemäßen Verfahrenstyp so kurz gehalten werden kann, daß unter den gewählten Arbeitsbedingungen substantielle Schädigungen des zu trocknenden Gutes noch nicht auftreten. So können beispielsweise auch an sich hydrolysegefährdete Tensidverbindungen unter diesen Arbeitsbedingungen Verweilzeiträume von einigen Minuten weitgehend unbeschadet überstehen. Damit wird es möglich, daß man im erfindungsgemäßen Trocknungsverfahren wäßrige Zubereitungen wasserlöslicher und/oder unlöslicher organischer und/oder anorganischer Wertstoffe aus Netz-, Wasch- und/oder Reinigungsmitteln der Trocknung unterwirft, die beispielsweise den nachfolgenden Stoffklassen zuzuordnen sind: Komponenten mit Tensidbeziehungsweise Emulgatorwirkung, anorganische und/oder organische Gerüstsubstanzen oder Builder-Komponenten, Waschalkalien, Stellmittel beziehungsweise Neutralsalze, Textilweichmacher, Bleichaktivatoren, Hilfsstoffe zur Verbesserung des Schmutztragevermögens der Flotten wie Vergrauungsinhibitoren oder auch Abrasivstoffe.

Wird die Beibehaltung nicht unbeträchtlicher Wassermengen im Produkt der Haupttrocknung und damit gegebenenfalls die Bindung dieses Restwassers zur Sicherung der lagerbeständigen Schütt- beziehungsweise Rieselfähigkeit des Trockengutes gefordert, so werden erfindungsgemäß Hilfsstoffe eingesetzt, die bevorzugt als partikulärer Festkörper zur Wasserfixierung befähigt sind. Eine solche Fixierung von Restwasser kann beispielsweise über dessen Einbindung als Kristallwasser erfolgen. Ebenso ist aber auch eine rein absorptive Bindung begrenzter Wassermengen in Feststoffteilchen der hier betroffenen Art möglich, ohne daß dadurch eine unerwünschte Klebrigkeit beziehungsweise Haftung der Teilchen gegeneinander ausgelöst werden muß.

Die Hilfsstoffe werden dabei in wenigstens so hinreichender Mengen eingesetzt, daß trotz der im Gut verbliebenen Restfeuchte die Sicherstellung der Schütt- und Lagerbeständigkeit gewährleistet ist.

Die das Restwasser-bindenden Hilfsstoffe können in einer Ausführungsform der Erfindung dem getrockneten Frischgut zweckmäßigerweise unmittelbar nach dessen Ausschleusung aus dem Verfahren zugesetzt und damit intensiv vermischt werden. In bevorzugten Ausführungsformen werden die Restwasserbindenden Hilfsstoffe allerdings wenigstens anteilsweise, vorzugsweise wenigstens überwiegend oder in der Regel in ihrer Gesamtmenge schon den wäßrigen Wertstoffzubereitungen vor ihrer Sprühtrocknung zugemischt. Möglich ist diese zuletzt genannte Ausführungsform immer dann, wenn die jeweilige Temperatursensitivität des zu trocknenden Gutes eine so weitgehende Trocknung zuläßt, daß die verbleibende Restfeuchte in hinreichendem Ausmaß durch solche mitverwendeten Hilfsstoffe aufgenommen und abgebunden werden kann.

In einer in diesem Zusammenhang bevorzugten Ausführungsform des erfindungsgemäßen Verfahrens werden als Restwasser-bindende Hilfsstoffe entsprechende Wertstoffe aus dem Bereich der Netz-, Wasch- und/oder Reinigungsmittel eingesetzt, die ihrerseits hinreichend temperaturunempfindlich sind. Typische Beispiele hierfür sind Kristallwasser-bindende anorganische Wertstoffe aus den Klassen der Builder-Komponenten, der Waschalkalien und/oder der sogenannten Stellmittel. Typische Beispiele der hier aufgezählten Wertstoff-Unterklassen sind Kristallwasser-bindende Silikatverbindungen insbesondere aus der Klasse der Zeolithe. Ein für Textilwaschmittel besonders charakteristisches Beispiel ist hier heute der Zeolith-NaA in Waschmittelqualität und einem Calciumbindevermögen im Bereich von 100 - 200 mg CaO/g - vergleiche hierzu die Angaben der DE 24 12 837. Typische Beispiele für Kristallwasser-bindende Waschalkalien sind Soda oder Natriumbicarbonat, während als Neutralsalz beziehungsweise Stellmittel dem Natriumsulfat eine ausgeprägte Fähigkeit zur Bindung von beträchtlichen Mengen an Kristallwasser zukommt. Neben oder anstelle solcher Hilfsstoffe mit der Fähigkeit zur Kristallwasserbindung kann aber das Restwasser auch durch Hilfsmittel beziehungsweise entsprechende Wertstoffe mit der Fähigkeit zur absorptiven Wasserbindung eingesetzt werden. So ist es bekannt, daß bekannte Vergrauungsinhibitoren auf Stärke- beziehungsweise Zellulosebasis, textilweichmachende Hilfsmittel insbesondere auf Basis anorganischer, quellfähiger Silikate aber auch eine Reihe von unter Normalbedingungen festen organischen Tensidverbindungen in der Lage sind, nicht unbeträchtliche Wassermengen aufzunehmen ohne mit einer unerwünschten Oberflächenklebrigkeit darauf zu reagieren.

Je nach der Temperaturempfindlichkeit der eingesetzten Wertstoffe beziehungsweise Wertstoffgemische einerseits und der Natur und der Menge der gegebenenfalls mitverwendeten Hilfsstoffe andererseits, können beträchtliche Restwassergehalte im feinteilig aufgetrockneten Gut zurückbleiben ohne dessen lagerbeständige Schütt- und Rieselfähigkeit zu gefährden. Erfindungsgemäß ist dementsprechend vorgesehen, die Trocknung mit überhitztem Wasserdampf bei Restwassergehalten des aus der Sprühzone entnommenen Gutes im Bereich von etwa 0,5 - 20 Gew.-% abzubrechen, wobei Restwassergehalte im Bereich von etwa 5 - 12 Gew.-% bevorzugt sein können. Die hier angegebenen Gew.-%-Bereiche beziehen sich dabei jeweils auf das Gewicht des aus der Wasserdampfzone entnommenen feinteiligen Gutes. Erfindungsgemäß ist es allerdings weiterhin bevorzugt, den Anteil dieses Restwassers, der nicht als Kristallwasser gebunden ist, einzugrenzen. So kann es zweckmäßig sein, diesen Wasseranteil auf höchstens etwa 10 Gew.-% vorzugsweise auf nicht mehr als etwa 5 - 7 Gew.-% und zweckmäßigerweise auf Werte von höchstens etwa 1 - 3 Gew.-% einzugrenzen. Auch hier gilt zur Gew.-%-Angabe das zuvor Gesagte. Unter Berücksichtigung des Fachwissens aus dem hier angesprochenen Sachgebiet gelingt schon damit zuverlässig auch und gerade unter Einsatz des überhitzten Wasserdampfes bei hohen Arbeitstemperaturen die Kombination der angestrebten Eigenschaften: Temperaturschonende hinreichende Auftrocknung, Abbruch der Trocknungsreaktion auch wenn noch beträchtliche Restwassergehalte im Gut vorliegen, um damit unerwünschte Temperatureinwirkungen auszuschließen, und gleichwohl Sicherstellung der lagerbeständigen Schütt- und Rieselfähigkeit im Sinne der Praxisanforderungen.

Wie bereits angegeben sieht das erfindungsgemäße Verfahren für die Stufe der Einstellung der jeweils gewünschten Restfeuchte zusätzliche Arbeitsmoglichkeiten vor, die neben oder anstelle des zuvor geschilderten Prinzips der Inneren Trocknung zum Einsatz kommen können. Diesen alternativen Arbeitsmöglichkeiten sehen die Homogenisierung und/oder die stufenweise Absenkung des Feuchtigkeitsgehaltes im zu trocknenden Gut vor, wobei sich an die Stufe der Sprühtrocknung eine oder mehrere Nachtrocknungsstufen anschließen, die unter vergleichsweise gemäßigten Arbeitsbedingungen noch störende Feuchtigkeitsanteile austragen. Grundsätzlich sind hier alle dem Fachmann bekannten Nachtrocknungen im direkten oder indirekten Kontakt mit Heißgasen geeignet. Die bevorzugte Alternative des erfindungsgemäßen Verfahrens sieht auch für eine solche Nachtrocknung in zweckmäßiger Weise einer zusätzlichen Arbeitsstufe den Einsatz von überhitztem Wasserdampf vor. Zur Minderung der Gefährdung des temperatursensitiven Gutes kann die Einsatztemperatur des überhitzten Wasserdampfes niedriger liegen als in der Stufe der Sprühtrocknung. Besonders bewährt hat sich jedoch die nachfolgende Alternative:
Das einen noch zu hohen Anteil an Restfeuchte aufweisende feinteilige Gut wird der Sprühtrocknungszone entnommen und in eine nachfolgende Wirbelschichttrocknung übergeführt. Dabei kann eine partielle Agglomerierung des noch hinreichend feuchten Gutes aus der Sprühtrocknungszone zu einem gröberem Agglomerat durchaus hingenommen werden oder sogar im Rahmen einer bevorzugten Ausführungsform im Sinne des erfindungsgemäßen Handelns liegen. Ein solcher partieller Agglomerierungsschritt kann insbesondere dazu dienen, den Feinanteil des der Sprühtrocknungszone entnommenen Gutes zu binden und dabei beispielsweise mit dem noch feuchteren Grobkorn dieses primären Trocknungsproduktes zu vereinigen. In der jetzt anschließenden Wirbelschichttrocknung wird in an sich bekannter Weise mit den stark erhöhten Feststoffdichten im Trocknungsraum gearbeitet, die zum intensiven Temperaturaustausch zwischen allen Feststoffteilchen der Wirbelschicht führen und damit unerwünschte Temperatursteigerungen in einem Anteil des zu trocknenden körnigen Gutes selbst dann verhindern, wenn auch hier mit Wasserdampf als Trocknungsgas gearbeitet wird, der auf vergleichsweise hohe Temperaturen überhitzt worden ist.

In einer solchen Nachtrocknungsstufe im Wirbelbett bedarf es in der Regel nur noch der Entfernung begrenzter Mengen der Restfeuchte um die lagerbeständige Rieselfähigkeit des körnigen Gutes sicherzustellen, so daß auch die Verweilzeit des Gutes in dieser Wirbelschichtnachbehandlung kurz gehalten werden kann und beispielsweise nur einige Minuten beträgt. Die Haupttrocknung in der Sprühzone und die Nachtrocknung in der Wirbelschicht können im Verbund eines kontinuierlichen Verfahrens oder aber auch als getrennte Verfahrensstufen unabhängig voneinander gefahren werden. Im einzelnen gilt hier das allgemeine Fachwissen.

In einer solchen nachgeschalteten zweiten Trocknungsstufe kann die noch vorliegende Restfeuchte anteilsweise oder praktisch vollständig ausgetragen werden. In praktischen Ausführungsformen wird bei Einsatz einer solchen Verfahrensmodifikation die Restfeuchte des der Sprühzone entnommenen Gutes zu wenigstens etwa 10 - 80 %, vorzugsweise etwa 20 - 70 % entnommen - % bezogen auf die Restfeuchte. Letztlich im Gut verbleibende Feuchte wird über die Innere Trocknung unschädlich gemacht.

In einer wichtigen Ausführungsform wird das erfindungsgemäße Verfahren zur Trocknung von Wertstoffabmischungen für den Aufbau von Textilwaschmitteln eingesetzt. Die zu trocknenden wäßrigen Einsatzmaterialien enthalten dabei vorzugsweise waschaktive Tenside zusammen mit Gerüst- beziehungsweise Builder-Substanzen, sowie gewünschtenfalls Waschalkalien und/oder Neutralsalze. Bevorzugt ist hier wenigstens ein Anteil der jeweils eingesetzten Mehrstoffmischungen zur Bindung und/oder Fixierung von Restwasser insbesondere in Form von Kristallwasser befähigt. Ebenso wie im Sprühtrocknungsverfahren von Textilwaschmitteln wird bei solchen Stoffmischungen in aller Regel nicht das Textilwaschmittel in seiner Gesamtheit der Sprühtrocknung ausgesetzt. Hier steht die extreme Temperaturempfindlichkeit peroxidenthaltender Bleichkomponenten wie Perborat-Monohydrat beziehungsweise -Tetrahydrat beziehungsweise entsprechender anderer besonders temperatursensitiver Komponenten entgegen. Als weitere Beispiele seien genannt Enzyme, Duftstoffe, gegebenenfalls auch Bleichaktivatoren und andere Kleinkomponenten. Auch die Lehre der Erfindung sieht dementsprechend unter anderem die Herstellung sogenannter Mehrkomponenten-Turmpulver vor, die einen Großteil der das Fertigwaschmittel ausmachenden Komponenten in Mischung vereinigt enthalten, nachträglich aber noch mit flüssigen und/oder festen weiteren Wirkstoffkomponenten beaufschlagt beziehungswise vermischt werden. Bekannte Beispiele für solche Flüssigkomponenten sind insbesondere leichtflüchtige niotensidische Komponenten, die im erfindungsgemäßen Verfahren zwar nicht mehr über das Abgas in die Umwelt entlassen werden, deren Zugabe zum Gesamtwaschmittel gleichwohl durch nachträgliches Aufdüsen auf ein erfindungsgemäß vorbereitetes saugfähiges Turmpulver einfach ausgestaltet werden kann.

Die Arbeitsbedingungen des erfindungsgemäßen Verfahrens ermöglichen den Einsatz hoher Temperaturen der im Kreislauf geführten Wasserdampfphase im Bereich des Trocknungsschrittes der Sprühtrocknung. In der Regel liegen die Arbeitstemperaturen des Einsatz-Dampfes oberhalb 150°C und vorzugsweise bei wenigstens etwa 200°C in der Gasphase. Dabei können Arbeitstemperaturen von 250°C und darüber besonders interessant sein, wobei insbesondere auch der Temperaturbereich von wenigstens 300°C, insbesondere 300 - 380°C in Betracht kommt. Für viele Fälle sind Arbeitstemperaturen im Bereich von etwa 270 - 350°C in der Wasserdampfphase besonders geeignet. Dabei beziehen sich alle diese Temperaturangaben jeweils auf die Temperatur des der Sprühzone im Gleich- oder Gegenstrom zugeführten auf Optimal-Temperatur aufgeheizten Wasserdampfstromes. In an sich bekannter Weise sinkt im Verlaufe des Verweilens mit dem nassen beziehungsweise feuchten Gut die Temperatur des Wasserdampfes. Weitgehend energetische Überlegungen - insbesondere auch zu der beabsichtigten Weiterverwendung des auszukreisenden Dampfteilstromes - bestimmen die Mengenverhältnisse zwischen der zu verdampfenden flüssigen Wassermenge und der zugeführten Menge des überhitzten Wasserdampfes. Möglich sind hier Ausführungsformen, die nur eine beschränkte Absenkung der Dampftemperatur nach Verlassen der Sprühzone beispielsweise auf Werte im Bereich von etwa 190 - 250°C beinhalten, während in anderen Ausführungsformen eine weiterführende Ausnutzung der thermischen Energie des Wasserdampfes bis zu einer Absenkung der Dampftemperatur in die Nähe der Kondensationstemperatur unter Verfahrensbedingungen - 100 bis 110°C -zweckmäßig beziehungsweise vorteilhaft sein kann. Im einzelnen werden diese Detailfragen durch die Ausgestaltung des Kreislaufverfahrens in seiner Gesamtheit mitbestimmt. Entsprechende Überlegungen gelten für den Einsatz von überhitztem Wasserdampf als Heißgas in einer gegebenenfalls vorgesehenen Nachtrocknungsstufe im Wirbelschichtverfahren. Auch die zuvor angegebenen Zahlenwerte gelten hier sinngemäß.

Grundsätzlich gilt für diese Überlegungen, daß im geschlossenen System mit einem Wasserdampfkreislaufstrom gearbeitet wird, dem der verdampfte Wasseranteil des Einsatzgutes entzogen wird, während der insbesondere im Trocknungsschritt abgegebene Energiebetrag dem Kreislaufstrom auf indirektem Weg wieder zugeführt wird. Der abgezogene Wasserdampfteilstrom wird nach der Reinigung von mitgetragenen Gutanteilen in einer wichtigen Ausführungsform als Brauchdampf anderweitiger Verwendung zugeführt, nachdem gewünschtenfalls zunächst Druck und Temperatur dieses Dampfteilstromes den dort geforderten Bedingungen angeglichen worden sind. In einer anderen Ausführungsform des erfindungsgemäßen Verfahrens kann es zweckmäßig sein, wenigstens einen Anteil dieses abgezogenen Dampfteilstromes zu kondensieren, um damit beispielsweise eine Naßwäsche des abgezogenen Dampfteilstromes und dessen Reinigung von mitgetragenen Gutanteilen zu bewirken. Die dabei anfallende wäßrige Flüssigphase kann zusammen mit den darin vorliegenden ausgekreisten Wertstoffanteilen in das Trocknungsverfahren zurückgeführt werden. In diesem Zusammenhang ist es beispielsweise möglich, dampfförmige Anteile des ausgekreisten Gasstromes zur Aufkonzentrierung einer solchen Waschflüssigphase einzusetzen. Die zurückgeführten Flüssiganteile mit Wertstoffgehalten können unmittelbar der Sprühzone zugeführt oder zunächst mit den wäßrigen Frischzubereitungen vermischt und in dieser Form zur Trocknung in die Sprühzone eingegeben werden.

Eine besonders interessante Ausführungsform der erfindungsgemäßen Lehre sieht die Rückgewinnung und Verwertung der Kondensationswärme des aus dem Kreislauf ausgeschleusten Wasserdampfanteiles vor. Durch den Einsatz geeigneter Arbeitsschritte kann dabei die Recyclisierung auch der geringen Wertstoffanteile sichergestellt werden, die über den ausgeschleusten Heißdampfstrom den primären Kreislauf des Dampfes verlassen haben. Hier kann beispielsweise unter Ausnutzung der Kondensationswärme des ausgeschleusten Dampfanteiles wie folgt gearbeitet werden:
In einer bevorzugt mehrstufigen Eindampfanlage wird unter Ausnutzung der Kondensationswärme des abgezogenen Dampfteilstromes das Dampfkondensat aufkonzentriert. Das dabei anfallende Restkonzentrat wird in den Verfahrensprimärkreislauf zurückgeführt. Insbesondere kann dieses Restkonzentrat dem durch überhitzten Heißdampf zu trocknenden Wertstoffslurry zugegeben werden.

Falls erforderlich, kann bei der Kondensation des aus dem Primärkreislauf ausgeschleusten Heißdampfes eine hier gegebenenfalls anfallende mit geringsten Wertstoffmengen beladene Restgasphase einem nachfolgenden Aufarbeitungsschritt - beispielsweise einer Verbrennung, der Behandlung in Biofiltern oder in Waschanlagen - zugeführt werden. Durch eine solche Kombination der Maßnahmen eines praktisch vollständigen Recyclisieren der jeweiligen Teilströme und der zuverlässigen Vernichtung von letzten Restspuren ermöglicht das erfindungsgemäße Verfahren auf dem hier betroffenen Arbeitsgebiet großtechnischer Fertigung erstmalig die Möglichkeit Wertstoffe und Wertstoffgemische aus dem Gebiet der Wasch- und Reinigungsmittel Abluft-frei und frei von beladenem Abwasser zu gewinnen.

Unabhängig davon und zusätzlich sind beträchtliche Energieeinsparungen im Vergleich mit der bis heute üblichen Heißgastrocknung durch die Lehre der Erfindung möglich. So gilt beispielsweise das Folgende: Durch eine Wasserdampfkreislaufführung auf vergleichsweise hohem Temperaturniveau (beispielsweise 130 +/- 30°C) sinkt die im Kreislaufverfahren aufzubringende Wärmemenge pro Kilogramm des zu verdampfenden Wassers um 10 bis 25 % gegenüber den heute üblichen Trocknungsverfahren mit einmaligem Durchgang der heißen Trocknungsgase. Zusätzlich zur Schadstofffreiheit erfüllt das erfindungsgemäße Verfahren somit weiterführende Forderungen moderner Technologie für großtechnisch durchgeführte Verfahrensabläufe.

Im Nachfolgenden finden sich allgemeine Angaben von Wertstoffen für die unmittelbare oder mittelbare Verwendung bei der Herstellung von Netz-, Wasch- und/oder Reinigungsmitteln unter Einsatz der erfindungsgemäßen Arbeitsprinzipien, wobei dieses Zusammenstellung an heute üblichen Komponenten von Textilwaschmitteln dargestellt ist.

Als anionische Tenside sind zum Beispiel Seifen aus natürlichen oder synthetischen, vorzugsweise gesättigten Fettsäuren brauchbar. Geeignet sind insbesondere aus natürlichen Fettsäuren zum Beispiel Kokos-, Palmkern- oder Talgfettsäuren abgeleitete Seifengemische. Bevorzugt sind solche, die zu 50 - 100 % aus gesättigten C₁₂₋₁₈-Fettsäureseifen und zu 0 - 50 % aus Ölsäureseife zusammengesetzt sind.

Weiterhin geeignete synthetische anionische Tenside sind solche vom Typ der Sulfonate und Sulfate. Besondere Bedeutung kann dabei das erfindungsgemäße Verfahren für entsprechende Verbindungen pflanzlichen und/oder tierischen Ursprungs haben.

Als Tenside vom Sulfonattyp kommen Alkylbenzolsulfonate (C₉₋₁₅-Alkyl), Olefinsulfonate, d.h. Gemische aus Alken- und Hydroxyalkansulfonaten sowie Sulfonate in Betracht, wie man sie beispielsweise aus C₁₂₋₁₈-Monoolefinen mit end- oder innenständiger Doppelbindung durch Sulfonieren mit gasförmigem Schwefeltrioxid und anschließende alkalische oder saure Hydrolyse der Sulfonierungsprodukte erhält. Geeignet sind auch die Alkansulfonate, die aus C₁₂₋₁₈-Alkanen durch Sulfochlorierung oder Sulfoxydation und anschließende Hydrolyse beziehungsweise Neutralisation beziehungsweise durch Bisulfitaddition an Olefine erhältlich sind, sowie insbesondere die Ester von Alpha-Sulfofettsäuren (Estersulfonate), zum Beispiel die Alpha-sulfonierten Methylester der hydrierten Kokos-, Palmkern- oder Talgfettsäuren.

Wichtige Tensid- beziehungsweise Emulgatorkomponenten sind in diesem Zusammenhang auch die sogenannten Di-salze, die sich durch Verseifung der zuvor genannten Alpha-sulfonierten Fettsäure-Methylester beziehungsweise durch unmittelbare Sulfonierung von insbesondere gesättigten Fettsäuren - insbesondere C₁₂₋₁₈-Fettsäuren - herstellen lassen. Das erfindungsgemäße Verfahren schafft damit erstmalig die Möglichkeit großtechnisch problemfrei Tenside der hier und im nachfolgenden beschriebenen Art auf Naturstoffbasis in trockener rieselfähiger Konzentratform zur Verfügung zu stellen, die praktisch unbegrenzte Lagerbeständigkeit beinhaltet und damit einen wesentlichen Beitrag zum weltweit angestrebten ABS-Austausch leisten können.

Geeignete Tenside vom Sulfattyp sind die Schwefelsäuremonoester aus primären Alkoholen natürlichen und synthetischen Ursprungs, d.h. aus Fettalkoholen, zum Beispiel Kokosfettalkoholen, Talgfettalkoholen, Oleylalkohol, Lauryl-, Myristyl-, Palmityl- oder Stearylalkohol, oder den C₁₀₋₂₀-Oxoalkoholen, und diejenigen sekundärer Alkohole dieser Kettenlänge. Auch die Schwefelsäuremonoester der mit insbesondere 1 bis 6 Mol Ethylenoxid ethoxylierten Alkohole natürlichen und/oder synthetischen Ursprungs sind geeignete Komponenten. Als Beispiel für Synthese-Alkohole seien Verbindungen wie 2-Methyl-verzweigte C₉₋₁₁-Alkohole mit im Durchschnitt 3,5 Mol Ethylenoxid genannt. Ferner eignen sich sulfatierte Fettsäuremonoglyceride.

Die anionischen Tenside können in Form ihrer Natrium-, Kalium- und Ammoniumsalze sowie als lösliche Salze organischer Basen vorliegen.

Als nichtionische Tenside sind Anlagerungsprodukte von 1 bis 40, vorzugsweise 2 bis 20 Mol Ethylenoxid an 1 Mol einer aliphatischen Verbindung mit im wesentlichen 10 bis 20 Kohlenstoffatomen aus der Gruppe der Alkohole, Carbonsäuren, Fettamine, Carbonsäureamide oder Alkansulfonamide verwendbar. Besonders wichtig sind die Anlagerungsprodukte von 8 bis 20 Mol Ethylenoxid an primäre Alkohole, wie zum Beispiel an Kokos- oder Talgfettalkohole, an Oleylalkohol, an Oxoalkohole, oder an sekundäre Alkohole mit 8 bis 18, vorzugsweise 12 bis 18 C-Atomen. Neben den wasserlöslichen Nonionics sind aber auch nicht beziehungsweise nicht vollständig wasserlösliche Polyglykolether mit 2 bis 7 Ethylenglykolether-Resten im Molekül von Interesse, insbesondere wenn sie zusammen mit wasserlöslichen, nichtionischen oder anionischen Tensiden eingesetzt werden. Es ist bereits zuvor darauf hingewiesen worden, daß auch im erfindungsgemäßen Verfahren der Verschleppungstendenz solcher nichtionischen Tenside dadurch Rechnung getragen werden kann, daß Komponenten dieser Art ganz oder teilweise nach Abschluß der Sprühtrocknung auf ein entsprechend vorgebildetes Turmpulver aufgetragen werden. Insbesondere kann das auch Gültigkeit für bei Raumtemperatur flüssige Niotenside haben.

Außerdem können als nichtionische Tenside auch Alkyglykoside der allgemeinen Formel R-O-(G)ₓ eingesetzt werden, in der R einen primären geradkettigen oder verzweigten aliphatischen Rest mit 8 bis 22, vorzugsweise 12 bis 18 C-Atomen bedeutet, G ein Symbol ist, das für eine Glykose-Einheit mit 5 oder 6 C-Atomen steht, und der Oligomerisierungsgrad x zwischen 1 und 10 liegt.

Als organische und anorganische Gerüst- beziehungsweise Builder-Substanzen eignen sich schwach sauer, neutral oder alkalisch reagierende lösliche und/oder unlösliche Komponenten, die Calciumionen auszufällen oder komplex zu binden vermögen. Geeignete und insbesondere ökologisch unbedenkliche Builder-Substanzen sind feinkristalline synthetische Zeolithe der bereits geschilderten Art. Als weitere Builder-Bestandteile, die insbesondere zusammen mit den Zeolithen eingesetzt werden können, kommen (co-)polymere Polycarboxylate in Betracht, wie Polyacrylate, Polymethacrylate und insbesondere Copolymere der Acrylsäure mit Maleinsäure, vorzugsweise solche mit 50 % bis 10 % Maleinsäure. Das Molekulargewicht der Homopolymeren liegt im allgemeinen zwischen 1.000 und 10.000, das der Copolymeren zwischen 2.000 und 200.000, vorzugweise 50.000 bis 120.000, bezogen auf freie Säure. Ein besonders bevorzugtes Acrylsäure-Maleinsäure-Copolymer weist ein Molekulargewicht von 50.000 bis 100.000 auf. Geeignete, wenn auch weniger bevorzugte Verbindungen dieser Klasse sind Copolymere der Acrylsäure oder Methacrylsäure mit Vinylethern, wie Vinylmethylether, in denen der Anteil der Säure mindestens 50 % beträgt. Brauchbar sind ferner Polyacetalcarbonsäuren, wie sie beispielsweise in den US-Patentschriften 4,144,226 und 4,146,495 beschrieben sind sowie polymere Säuren, die durch Polymerisation von Acrolein und anschließende Disproportionierung mittels Alkalien erhalten werden und aus Acrylsäureeinheiten und Vinylalkoholeinheiten beziehungsweise Acroleineinheiten aufgebaut sind.

Brauchbare organische Gerüstsubstanzen sind beispielsweise die bevorzugt in Form ihrer Natriumsalze eingesetzten Polycarbonsäuren, wie Citronensäure und Nitrilotriacetat (NTA), sofern ein derartiger Einsatz aus ökologischen Gründen nicht zu beanstanden ist.

In Fällen, in denen ein Phosphat-Gehalt toleriert wird, können auch Phosphate mitverwendet werden, insbesondere Pentanatriumtriphosphat, gegebenenfalls auch Pyrophosphate sowie Orthophosphate, die in erster Linie als Fällungsmittel für Kalksalze wirken.

Geeignete anorganische, nicht komplexbildende Salze sind die - auch als "Waschalkalien" bezeichneten - Bicarbonate, Carbonate, Borate oder Silikate der Alkalien; von den Alkalisilikaten sind vor allem die Natriumsilikate mit einem Verhältnis Na₂O : SiO₂ wie 1 1 bis 1 : 3,5 brauchbar. Aus den restlichen Gruppen üblicher Waschmittelbestandteile kommen zur Mitverwendung im erfindungsgemäßen Sprühtrocknungsverfahren insbesondere Komponenten aus den Klassen der Vergrauungsinhibitoren (Schmutzträger), der Neutralsalze und der textilweichmachenden Hilfsmittel in Betracht.

Geeignete Vergrauungsinhibitoren sind beispielsweise Carboxymethylcellulose, Methylcellulose, Methylhydroxyethylcellulose und deren Gemische. Ein typisches Beispiel für einen geeigneten Vertreter der Neutralsalze ist das bereits erwähnte Natriumsulfat zu nennen. Geeignete Weichmacher sind beispielsweise quellfähige Schichtsilikate von der Art entsprechender Montmorilonite, beispielsweise Bentonit.

Hochtemperatursensitive und/oder bei Raumtemperatur flüssige übliche Mischungsbestandteile von Wasch- und Reinigungsmitteln, wie flüssige Niotensidkomponenten, Bleichmittel auf Basis von Per-Verbindungen, Enzyme aus der Klasse Proteasen, Lipasen und Amylasen beziehungsweise Bakterienstämme oder Pilze, Stabilisatoren, Parfüme, temperaturempfindliche Farbstoffe und dergleichen, werden wie bereits angegeben, zweckmäßigerweise mit den zuvor gewonnenen Trockenpulvern vermischt.

### Beispiele

In einem Versuchssprühturm im Technikumsmaßstab vom Typ "Minor Produktion" der Firma Niro-Atomizer wurde ein Pulverprodukt, sogenanntes "Turmpulver", eines Waschmittels durch Versprühen von Waschmittelslurry in überhitztem Wasserdampf erzeugt. Der im Kreislauf geförderte Wasserdampf wurde vor dem Eintritt in den Trockner durch einen Überhitzer mit indirektem Wärmeaustausch geführt. Der Waschmittelslurry enthielt im Feststoffanteil 16 Gew.-% Tenside, ca. 20 Gew.-% Soda sowie Zeolith NaA, Wasserglas, Sokalan (R) sowie übliche Kleinkomponenten. Der Wasseranteil des Slurrys betrug 50 Gew.-%. Der Slurry wurde im Trockner mittels einer Hohlkegeldüse (D_{N} = 0,7 mm, Streukegel ca. 45°C) verdüst, wobei der Sprühdruck sich auf 6 bar belief. Der Zulaufstrom an Slurry wurde auf 20,8 kg/h (16 l/h) bei einer Temperatur von 60°C eingestellt. Der Heißdampfstrom zur Trocknung betrug 181,1 kg/h. Die Eintrittstemperatur betrug T_{E} = 350°C, die Austrittstemperatur belief sich auf T_{A} = 184°C. Dies entspricht einem zugeführten Wärmestrom von 60132 kJ/h.

Es wurde ein Pulver mit einem Trockensubstanzgehalt von TS = 92,4 Gew.-% erzeugt, damit wurde eine Verdampfungsleistung von 9,66 kg/h erzielt. Der spezifische Energieverbrauch des Versuchstrockners belief sich auf 6226,8 kJ/kg. Zur Charakterisierung des Produktes sei das Ergebnis der Siebanalyse gegeben:

| | |
|---|---|
| größer als 1,6 mm | 0,45 |
| größer als 0,8 mm | 6,71 |
| größer als 0,4 mm | 15,86 |
| größer als 0,2 mm | 29,72 |
| größer als 0,1 mm | 40,31 |
| kleiner/gleich 0,1 mm | 7,14 |

Die Schüttdichte des so erzeugten Pulvers betrug 407,0 g/l.
Während des Versuches ist am Kondensator ein Kondensatstrom von ca. 8,5 kg/h aufgefangen worden. Dies entspricht einer Wärmerückgewinnung von 20574,6 kJ/h.

## Patentansprüche

1. Verfahren zur Sprüh- und/oder Wirbelschicht-Trocknung von wasserhaltigen Wertstoffen oder Wertstoffgemischen, die als Netz-, Wasch- und/oder Reinigungsmittel und/oder zur Verwendung in solchen Mitteln geeignet sind und auch als wäßrige Zubereitungen vorliegen können, unter Einsatz von überhitztem Wasserdampf als Trocknungsgas, das nach Ausschleusen des verdampften Wasseranteiles im Kreislauf in die Trocknungsstufe zurückgeführt wird, dadurch gekennzeichnet, daß zur Gewinnung eines hochwertigen, insbesondere hellfarbigen und/oder von Carbonatablagerungen freien Trocknungsgutes der für die Wasserverdampfung benötigte Energiebetrag dem Dampfkreislaufstrom wenigstens weitaus überwiegend durch indirekten Wärmeaustausch zugeführt wird, wobei im Falle der Sprühtrocknung dieser Energieeintrag wenigstens überwiegend außerhalb der Trocknungszone vorgenommen wird, während bei der Wirbelschicht-Trocknung auch mittels in das Wirbelbett integrierter Wärmeaustauschflächen gearbeitet werden kann.

2. Verfahren nach Anspruch 1, dadurch gekennzeichnet, daß mit Innendrucken des dampferfüllten Systems im Bereich des Normaldrucks aber dabei vorzugsweise mit derart angehobenen Drucken gearbeitet wird, daß Lufteinbrüche - beispielsweise an Schadstellen - in das System verhindert werden, wobei Überdrücke unterhalb etwa 50 mbar bevorzugt sind.

3. Verfahren nach Ansprüchen 1 und 2, dadurch gekennzeichnet, daß fließfähige und versprühbare wäßrige Lösungen, Emulsionen und/oder Suspensionen der aufzutrocknenden Wertstoffe beziehungsweise Wertstoffgemische der Sprühtrocknung mit dem Dampfkreislaufstrom unterworfen werden.

4. Verfahren nach Ansprüchen 1 bis 3, dadurch gekennzeichnet, daß die Temperatur des Kreislaufdampfes im Bereich von etwa 100 bis 450°C, vorzugsweise von etwa 115 bis 350°C, gehalten wird.

5. Verfahren nach Ansprüchen 1 bis 4, dadurch gekennzeichnet, daß mit Dampfaustrittstemperaturen aus der Sprühtrocknungszone von wenigstens 150°C, vorzugsweise von wenigstens etwa 180°C, gearbeitet wird.

6. Verfahren nach Ansprüchen 1 bis 5, dadurch gekennzeichnet, daß die Trocknung des partikulären Gutes vor dessen Gefährdung durch thermische Einwirkung abgebrochen wird, wobei erforderlichenfalls die lagerbeständige Schütt- beziehungsweise Rieselfähigkeit des derart partiell aufgetrockneten Gutes durch Zusatz solcher Mischungsbestandteile sichergestellt wird, die zur Bindung begrenzter Wassermengen befähigt sind und/oder eine Nachbehandlung zur Homogenisierung des Restfeuchtegehaltes im partikulären Gut und/oder dessen Nachtrocknung unter Wertstoff-schonenden Bedingungen angeschlossen wird.

7. Verfahren nach Ansprüchen 1 bis 6, dadurch gekennzeichnet, daß man wäßrige Zubereitungen wasserlöslicher und/oder unlöslicher organischer und/oder anorganischer Wertstoffe aus Netz-, Wasch- und/oder Reinigungsmitteln, insbesondere Textilwaschmitteln, wie Komponenten mit Tensid- beziehungsweise Emulgator-Wirkung, anorganische und/oder organische Gerüstsubstanzen oder Builder-Komponenten, Waschalkalien, Stellmittel beziehungsweise Neutralsalze, Textilweichmacher, Bleichaktivatoren, Hilfsstoffe zur Verbesserung des Schmutztragevermögens, wie Vergrauungsinhibitoren und Abrasivstoffe, dem Verfahren unterwirft.

8. Verfahren nach Ansprüchen 6 und 7, dadurch gekennzeichnet, daß man zur Bindung des Restwassers Hilfsstoffe einsetzt, die als partikulärer Festkörper zur Wasserfixierung, beispielsweise über dessen Einbindung als Kristallwasser oder durch absorptive Bindung, befähigt sind und dabei in einer Ausführungsform in wenigstens so hinreichender Menge mitverwendet werden, daß die Schütt- und Lagerbeständigkeit des Trokkengutes gewährleistet ist.

9. Verfahren nach Ansprüchen 6 bis 8, dadurch gekennzeichnet, daß die Restwasser-bindenden Hilfsstoffe wenigstens anteilsweise, vorzugsweise wenigstens überwiegend schon den wäßrigen Wertstoffzubereitungen vor ihrer Trocknung mit dem überhitzten Wasserdampf zugemischt worden sind.

10. Verfahren nach Ansprüchen 6 bis 9, dadurch gekennzeichnet, daß als Restwasser-bindende Hilfsstoffe entsprechende Wertstoffe aus dem Bereich der Netz-, Wasch- und/oder Reinigungsmittel, beispielsweise Kristallwasser-bindende anorganische Wertstoffe aus den Klassen der Builder-Komponenten, Waschalkalien und/oder Stellmittel, beziehungsweise organische Wertstoffe mit der Fähigkeit absorptiver Wasserbindung eingesetzt werden.

11. Verfahren nach Ansprüchen 6 bis 10, dadurch gekennzeichnet, daß ein noch Restwasser-enthaltendes Gut aus der Sprühtrocknung mit überhitztem Wasserdampf einer wenigstens 1-stufigen Nachbehandlung unterworfen wird, die zu einer Homogenisierung der Restfeuchte im primär anfallenden, der Sprühtrocknungszone entnommenen Gut führt und/oder in Form einer Nachtrocknung vorgenommen wird, wobei solche Nachbehandlungen bevorzugt in Wirbelschicht durchgeführt werden, die ihrerseits mit überhitztem Wasserdampf als Heißgasstrom arbeiten.

12. Verfahren nach Ansprüchen 6 bis 11, dadurch gekennzeichnet, daß man den Trocknungsschritt mit dem überhitzten Wasserdampf bei Restwassergehalten im Bereich von etwa 0,5 bis 20 Gew.-%, vorzugsweise im Bereich von etwa 1 bis 12 Gew.-%, abbricht und dabei insbesondere den Gehalt an freiem, nicht als Kristallwasser-gebundenen Wasser auf Werte von höchstens etwa 10 Gew.-% begrenzt - Gew.-% jeweils bezogen auf das Gewicht des aus der Trocknungszone entnommenen feinteiligen Gutes.

13. Verfahren nach Ansprüchen 1 bis 12, dadurch gekennzeichnet, daß als Wertstoffe ausgewählte Einzelkomponenten organischer oder anorganischer Natur, vorzugsweise aus den Klassen der Tenside, beziehungsweise Emulgatoren oder der Gerüstsubstanzen, beziehungsweise Builder, insbesondere aus dem Gebiet der Wertstoffe für Textilwaschmittel, als rieselfähiges Trockengut gewonnen werden, wobei auch deren Abmischungen mit wasserlöslichen und bevorzugt zur Kristallwasserbindung befähigten Salzen zur Absicherung der Rieselfähigkeit und Lagerbeständigkeit und/oder zur Einstellung des Schüttgewichtes dem Verfahren unterworfen werden können.

14. Verfahren nach Ansprüchen 1 bis 13, dadurch gekennzeichnet, daß Wertstoffabmischungen für den Aufbau von Textilwaschmitteln aufgetrocknet werden, die vorzugsweise Tenside zusammen mit Gerüst- beziehungsweise Buildersubstanzen und gewünschtenfalls Waschalkalien und/oder Neutralsalzen enthalten.

15. Verfahren nach Ansprüchen 1 bis 14, dadurch gekennzeichnet, daß in der Trocknungszone mit überhitztem Wasserdampf einer Einsatztemperatur von wenigstens etwa 200°C, vorzugsweise bei oder oberhalb 250°C, als Heißgasstrom gearbeitet wird.

16. Verfahren nach Ansprüchen 1 bis 15, dadurch gekennzeichnet, daß unter wenigstens anteiliger Rückgewinnung der Kondensationswärme des ausgeschleusten Dampfanteiles und dabei bevorzugt mit Rückführung der ausgetragenen Gutanteile in den Primärkreislauf praktisch Abgas- und Abwasser-frei gearbeitet wird.

17. Anwendung des Verfahrens nach Ansprüchen 1 bis 16 zur Gewinnung von rieselfähigen Tensidfeststoffen, die auch in Abmischung mit insbesondere löslichen anorganischen Salzen zu Absicherung der Rieselfähigkeit und/oder des Schüttgewichtes vorliegen können.

18. Anwendung des Verfahrens nach Ansprüchen 1 bis 17 zur Herstellung von getrockneten Wertstoffen auf Silikat-Basis, die insbesondere in Textilwaschmitteln Verwendung finden können und dabei entsprechende quellfähige und/oder nichtquellfähige Vertreter wie Schichtsilikate, zum Beispiel Bentonite und/oder Zeolith-Verbindungen, insbesondere Zeolith-NaA in Waschmittelqualität umfassen.

19. Anwendung des Verfahrens nach Ansprüchen 1 bis 18 zur Gewinnung von Textilwaschmittelschwerpulvern beziehungsweise -granulaten, denen temperatursensitive und/oder wasserdampfflüchtige Komponenten zum Aufbau der fertigen Textilwaschmittel zugesetzt werden können.

## Claims

1. A process for the spray-drying and/or fluidized-bed drying of water-containing useful materials or mixtures of useful materials, which are suitable for use as and/or in wetting agents, detergents and/or cleaning products and which may even be present as agueous preparations, using superheated steam as the drying gas which is recycled to the drying stage after removal of the evaporated water, characterized in that, to obtain a high-quality and, in particular, light-coloured dry material and/or one free from carbonate deposits, the energy required for the evaporation of water is supplied to the circulating steam at least by far predominantly by indirect heat exchange; in the case of spray drying, this introduction of energy takes place at least predominantly outside the drying zone whereas, in the case of fluidized bed drying, heat-exchange surfaces integrated into the fluidized bed may also be used.

2. A process as claimed in claim 1, characterized in that the steam-filled system operates under internal pressures around normal pressure, but preferably under such elevated pressures that air is prevented from entering the system, for example in damaged areas, excess pressures below about 50 mbar being preferred.

3. A process as claimed in claims 1 and 2, characterized in that fluid and sprayable aqueous solutions, emulsions and/or suspensions of the useful materials or mixtures of useful materials are subjected to spray drying with the circulating steam.

4. A process as claimed in claims 1 to 3, characterized in that the temperature of the gas circulation phase is kept at a value in the range from about 100 to 450°C and preferably at a value in the range from about 115 to 350°C.

5. A process as claimed in claims 1 to 4, characterized in that the steam leaves the spray drying zone with temperatures of at least 150°C and preferably with temperatures of at least about 180°C.

6. A process as claimed in claims 1 to 5, characterized in that drying of the particulate material is terminated before it is endangered by heat, the long-term pourability and free flow of the material thus partly dried being established if necessary by addition of mixture constituents which are capable of binding limited quantities of water and/or by an aftertreatment to homogenize the residual moisture content in the particulate material and/or by after-drying of the particulate material under conditions which do not affect the useful material.

7. A process as claimed in claims 1 to 6, characterized in that aqueous preparations of water-soluble and/or insoluble organic and/or inorganic useful materials from wetting agents, detergents and/or cleaning products, such as surfactants and emulsifiers, inorganic and/or organic builders or builder components, washing alkalis, fillers or neutral salts, fabric softeners, bleach activators, auxiliaries for improving soil suspending power, such as redeposition inhibitors and abrasives, are subjected to the process.

8. A process as claimed in claims 6 and 7, characterized in that auxiliaries in the form of particulate solids which are capable of fixing water, for example by binding as water of crystallization or by absorptive binding, are used to bind the residual water and, in one embodiment, are used in quantities at least sufficient to ensure the pourability and storability of the dry material.

9. A process as claimed in claims 6 to 8, characterized in that the auxiliaries used to bind the residual water are at least partly and preferably at least predominantly added to the aqueous preparations of useful material before they are dried with superheated steam.

10. A process as claimed in claims 6 to 9, characterized in that the auxiliaries used to bind residual water are useful materials from the field of wetting agents, detergents and/or cleaning products, for example inorganic useful materials which bind water of crystallization from the classes of builder components, washing alkalis and/or fillers, or organic useful materials capable of absorptively binding water.

11. A process as claimed in claims 6 to 10, characterized in that a material containing residual water from the spray drying process with superheated steam is subjected to an at least one-stage aftertreatment which results in homogenization of the residual moisture in the material initially accumulating and removed from the spray drying zone and/or which is carried out in the form of after-drying, the aftertreatments preferably being carried out in fluidized beds which in turn are operated with superheated steam as the hot gas stream.

12. A process as claimed in claims 6 to 11, characterized in that the drying step with superheated steam is terminated at residual moisture contents of about 0.5 to 20% by weight and preferably of the order of 1 to 12% by weight and, more particularly, the content of free water which is not bound as water of crystallization is limited to values of at most about 10% by weight, based on the weight of the fine-particle material removed from the drying zone.

13. A process as claimed in claims 1 to 12, characterized in that individual components of organic or inorganic character selected as useful materials, preferably from the classes of surfactants or emulsifiers or builders or builder components, more particularly from the field of useful materials for laundry detergents, are obtained as the free-flowing dry material and may even be subjected to the process in the form of mixtures with water-soluble salts capable of binding water of crystallization for ensuring pourability and storability and/or adjusting apparent density.

14. A process as claimed in claims 1 to 13, characterized in that mixtures of useful materials for the production of laundry detergents, which preferably contain surfactants together with builders or builder components and optionally washing alkalis and/or neutral salts, are dried.

15. A process as claimed in claims 1 to 14, characterized in that superheated steam with an entry temperature of at least about 200°C and preferably of, or above, 250°C is used as the hot gas stream in the drying zone.

16. A process as claimed in claims 1 to 15, characterized in that the heat of condensation of the steam removed is at least partly recovered and the fractions of material removed are returned to the primary circuit at least substantially or practically free from waste gases and wastewater.

17. The use of the process claimed in claims 1 to 16 for the production of free-flowing surfactant solids which are present in particular in admixture with soluble inorganic salts for ensuring free flow and/or apparent density.

18. The use of the process claimed in claims 1 to 17 for the production of dried silicate-based useful materials which may be used in particular in laundry detergents and which comprise corresponding swellable and/or non-swellable representatives, such as layer silicates, for example bentonites, and/or zeolite compounds, more particularly detergent-quality zeolite NaA.

19. The use of the process claimed in claims 1 to 18 for the production of laundry detergent heavy powders or granules to which temperature-sensitive and/or steam-volatile components are added for the production of the final laundry detergents.

## Revendications

1. Procédé de séchage par pulvérisation et/ou par couche fluidisée de matières ou mélanges de matières de valeur contenant de l'eau, qui sont appropriées comme agents mouillants, détergents et/ou agents de nettoyage pour être utilisés dans de tels produits et peuvent être présents aussi comme préparations aqueuses, procédé utilisant de la vapeur d'eau surchauffée comme gaz de séchage après éclusage au dehors de la proportion d'eau vaporisée, procédé caractérisé en ce que pour l'obtention d'un produit de séchage de grand intérêt en particulier de couleur claire et/ou sous dépôts de carbonate, le montant énergétique de vapeur de manière au moins largement prépondérante par échange thermique indirect, cette fourniture d'énergie dans le cas du séchage par pulvérisation étant prise au moins principalement en dehors de la zone de séchage, tandis que dans le cas du séchage par couche fluidisée on peut opérer aussi au moyen de surfaces d'échange thermique intégrées dans le lit fluidisé.

2. Procédé selon la revendication 1, caractérisé en ce qu'on opère avec des pressions internes du système rempli de vapeur au niveau de la pression normale mais en outre de préférence avec des pressions augmentées de manière que des irruptions d'air dans le système soient empêchées par exemple dans des endroits endommagés et en préférant des surpressions inférieures à environ 50 mbars.

3. Procédé selon les revendications 1 et 2, caractérisé en ce que des solutions aqueuses, des émulsions et/ou des suspensions aptes à l'écoulement et pulvérisables de matières de valeur ou de mélanges de matières de valeuront soumises au séchage par pulvérisation avec le courant circulant de vapeur.

4. Procédé selon les revendications 1 à 3, caractérisé en ce que la température de la vapeur en circuit est maintenue dans la gamme environ de 100 à 450°C, de préférence environ de 115 à 350°C.

5. Procédé selon les revendications 1 à 4, caractérisé en ce qu'on opère avec des températures de sortie de vapeur de la zone de séchage par pulvérisation d'au moins 150°C, de préférence d'au moins environ 180°C.

6. Procédé selon les revendications 1 à 5, caractérisé en ce que le séchage du produit sous forme particulaire est arrêté avant le risque encouru par effet thermique, tandis que si nécessaire l'aptitude au déversement ou à l'écoulement stable au stockage du produit séché partiellement de cette manière est assurée par addition de ces composants de mélange, qui sont aptes à lier des quantités d'eau limitées et/ou un traitement ultérieur destiné à homogénéiser la teneur en humidité résiduelle dans le produit particulaire et/ou son séchage ultérieur sont associés dans des conditions de protection de la matière de valeur.

7. Procédé selon les revendications 1 à 6, caractérisé en ce qu'on soumet le procédé à des préparations aqueuses de matières de valeur solubles dans l'eau et/ou insolubles, organiques et/ou minérales à partir d'agents mouillants, de détergents et/ou d'agents de nettoyage, en particulier d'agents de lavage de textiles, comme des composants avec effet de tensioactifs ou d'émulsionnants, des substances d'ossature minérales et/ou organiques ou des composants adjuvants, des alcalis de lavage, des agents de fixation ou des sels neutres, des assouplissants des textiles, des activateurs de blanchiment, des matières auxiliaires pour l'amélioration du pouvoir d'anti-redéposition, comme des inhibiteurs de grisaillement et des matières abrasives.

8. Procédé selon les revendications 6 et 7, caractérisé en ce que pour la liaison de l'eau résiduelle on met en oeuvre des matières auxiliaires, qui sont aptes en tant que corps solide particulaire à la fixation de l'eau, par exemple par son intégration comme eau de cristallisation ou par liaison par absorption et donc dans une forme de réalisation sont co-utilisés en quantité au moins suffisante, de sorte que la stabilité au déversement et au stockage est assurée.

9. Procédé selon les revendications 6 à 8, caractérisé en ce que, les matières auxiliaires liant l'eau résiduelle au moins partiellement, de préférence au moins de manière prépondérante sont déjà ajoutées et mélangées aux préparations aqueuses de matières de valeur avant leur séchage avec de la vapeur d'eau surchauffée.

10. Procédé selon les revendications 6 à 9, caractérisé en ce que comme matières auxiliaires liant l'eau résiduelle on met en oeuvre des matières de valeur correspondantes du domaine des agents mouillants, des détergents et/ou des agents de nettoyage, par exemple des matières de valeur minérales liant l'eau de cristallisation provenant des classes de composants adjuvants, d'alcalis de lavage et/ou d'agents de fixation, ou bien des matières de valeur organiques ayant l'aptitude à la liaison absorbante de l'eau.

11. Procédé selon les revendications 6 à 10, caractérisé en ce qu'un produit contenant encore de l'eau résiduelle du séchage par pulvérisation avec de la vapeur d'eau surchauffée est soumis à un traitement ultérieur d'au moins 1 étape, qui conduit à un produit prélevé à la zone de pulvérisation, résultant en premier lieu d'une homogénéisation de l'humidité résiduelle et/ou est repris sous la forme d'un séchage ultérieur, tandis que de tels traitements ultérieurs sont réalisés de préférence en couche fluidisée, qui de leur côté opèrent avec de la vapeur surchauffée comme courant de gaz très chauds.

12. Procédé selon les revendications 6 à 11, caractérisé en ce qu'on interrompt l'étape de séchage à la vapeur d'eau surchauffée avec des teneurs en eau résiduelle dans la gamme environ de 0,5 à 20 % en poids, de préférence dans la gamme environ de 1 à 12 % en poids et en outre on limite en particulier la teneur en eau libre, non liée comme eau de cristallisation à des valeurs au maximum environ de 10 % en poids, pourcentage en poids rapporté respectivement au poids du produit finement divisé prélevé de la zone de séchage.

13. Procédé selon les revendications 1 à 12, caractérisé en ce que sont obtenus, comme matières de valeur, des composants particuliers sélectionnés de nature organique ou minérale, de préférence des classes des tensioactifs ou des émulsionnants ou des substances d'ossature, ou bien des adjuvants, en particulier du domaine des matières de valeur pour agents de lavage de textiles, des mélanges avec des sels solubles dans l'eau et de préférence aptes à la liaison d'eau de cristallisation pouvant être soumis au procédé pour la sécurité de l'aptitude à l'écoulement et la stabilité au stockage et/ou pour l'ajustage de la densité en vrac.

14. Procédé selon les revendications 1 à 3, caractérisé en ce qu'on sèche des mélanges de matières de valeur pour la structuration d'agents de lavage de textiles, qui contiennent de préférence des tensioactifs ensemble avec des substances d'ossature ou des adjuvants et éventuellement des alcalis de lavage et/ou des sels neutres.

15. Procédé selon les revendications 1 à 4, caractérisé en ce que dans la zone de séchage à la vapeur d'eau surchauffée on opère à une température d'utilisation d'au moins environ 200°C, de préférence égale ou supérieure à 250°C, en tant que courant de gaz chaud.

16. Procédé selon les revendications 1 à 5, caractérisé en ce qu'on opère pratiquement sans gaz perdu et sans eaux usées par récupération au moins partielle de la chaleur de condensation de la proportion de vapeur éclusée et en outre de préférence avec recyclage des parties de produit dans le circuit primaire.

17. Application du procédé selon les revendications 1 à 6, pour l'obtention de matières solides tensioactives aptes à l'écoulement, qui peuvent être présentes aussi en mélange avec des sels minéraux en particulier solubles pour assurer l'aptitude à l'écoulement et/ou le poids spécifique.

18. Application du procédé selon les revendications 1 à 7, pour préparer des matières de valeur séchées à base de silicates, qui peuvent trouver utilisation en particulier dans des agents de lavage de textiles et comprennent en outre en qualité de détergents des représentants correspondants aptes et/ou non aptes à gonfler comme des silicates lamellaires, par exemple de la bentonite et/ou des composés de zéolite, en particulier de la zéolite NaA.

19. Application du procédé selon les revendications 1 à 18, pour l'obtention de poudres grossières ou de granulés pour des agents de lavage de textiles, auxquels on peut ajouter des composants sensibles à la température et/ou volatils à la vapeur d'eau pour structurer les agents de lavage des textiles préparés.
